# EUROPÄISCHE PATENTSCHRIFT

(11) **EP 3 738 423 B1**
(45) Veröffentlichungstag und Bekanntmachung des Hinweises auf die Patenterteilung: **03.05.2023**
(21) Anmeldenummer: 20159785.3
(22) Anmeldetag: 27.02.2020
(51) Int. Cl.: A01D 34/00, A01D 34/82, A01D 34/68

(54) **BEDIENVORRICHTUNG FÜR EINE GARTENBEARBEITUNGSMASCHINE, GARTENBEARBEITUNGSMASCHINE UND VERFAHREN ZU EINEM BETRIEB DER GARTENBEARBEITUNGSMASCHINE**
OPERATING DEVICE FOR A GARDENING MACHINE, GARDENING MACHINE AND METHOD FOR OPERATING THE SAME
DISPOSITIF DE FONCTIONNEMENT POUR UNE MACHINE DE JARDINAGE, MACHINE DE JARDINAGE ET PROCÉDÉ DE FONCTIONNEMENT DE LA MACHINE DE JARDINAGE

(30) Priorität: 28.02.2019 DE 102019202704
(43) Veröffentlichungstag der Anmeldung: 18.11.2020
(73) Patentinhaber: Robert Bosch GmbH, 70442 Stuttgart (DE)
(72) Erfinder: Ling, Matthew, Stowmarket Suffolk, IP14 5BB (GB); Graham, Colin, 70469 Stuttgart (DE); Adekunle, Abiodun, IP2 8JH Ipswich, Suffolk (GB)

(56) Entgegenhaltungen:
- DE-A1- 19 964 347
- US-A1- 2017 245 436
- US-B2- 6 904 740

## Beschreibung

### Stand der Technik

In der US 2003 / 056481 A ist bereits eine Bedienvorrichtung für einen Schiebe-Rasenmäher mit zumindest einer zu einer Ansteuerung zumindest eines Antriebs des Schiebe-Rasenmähers vorgesehenen Betätigungseinheit, die zumindest ein erstes beweglich gelagertes Betätigungselement aufweist, welches zu einer Aktivierung eines Standby-Betriebszustands vorgesehen ist, und mit zumindest einer Einstelleinheit, die zumindest ein Einstellelement zu einer Einstellung eines Vorschubsunterstützungsparameters aufweist, vorgeschlagen worden.

DE 10 2017 204 388 A beschreibt eine handgeführte Gartenbearbeitungsmaschine, insbesondere von einem Schieberasenmäher, mit zumindest einer Grundeinheit, mit zumindest einer Führungseinheit, welche zumindest einen Handgriff aufweist, und mit zumindest einer Erfassungseinheit, welche zu einer Erfassung einer von einem Bediener gewünschten Vorschubsunterstützung der Grundeinheit vorgesehen ist.

Ferner sei auf die Druckschriften US 6 904 740 B2, US 2017/245436 A1 und DE 199 64 347 A1 verwiesen.

### Offenbarung der Erfindung

Die Erfindung geht aus von einer Bedienvorrichtung für eine, insbesondere handgeführte, Gartenbearbeitungsmaschine, insbesondere für einen Schiebe-Rasenmäher, mit zumindest einer zu einer Ansteuerung zumindest eines Antriebs der, insbesondere handgeführten, Gartenbearbeitungsmaschine vorgesehenen Betätigungseinheit, die zumindest ein erstes beweglich, insbesondere drehbeweglich, gelagertes Betätigungselement aufweist, welches zu einer Aktivierung eines Standby-Betriebszustands, insbesondere des Antriebs der, insbesondere handgeführten, Gartenbearbeitungsmaschine, vorgesehen ist, und mit zumindest einer Einstelleinheit, die zumindest ein Einstellelement zu einer Einstellung eines Vorschubsunterstützungsparameters aufweist.

Es wird vorgeschlagen, dass die Einstelleinheit in zumindest einem Betriebszustand, insbesondere in einem Betriebszustand, in dem das Betätigungselement deaktiviert ist und/oder in dem ein Vorschub der, insbesondere handgeführten, Gartenbearbeitungsmaschine, vorzugsweise durch die Betätigungseinheit, deaktiviert ist, zu einem selbsttätigen Zurücksetzen des Vorschubsunterstützungsparameters des Einstellelements vorgesehen ist.

Unter einer "Bedienvorrichtung" soll insbesondere eine Vorrichtung verstanden werden, welche zumindest dazu vorgesehen ist, eine Bedienung und/oder eine Steuerung einer Funktion der, insbesondere handgeführten, Gartenbearbeitungsmaschine, beispielsweise einen Vortrieb der, insbesondere handgeführten, Gartenbearbeitungsmaschine, eine Richtungssteuerung der, insbesondere handgeführten, Gartenbearbeitungsmaschine und/oder eine Aktivierung eines Mähwerkzeugs der, insbesondere handgeführten, Gartenbearbeitungsmaschine zu ermöglichen. Vorzugsweise ist die Bedienvorrichtung zumindest teilweise mit einer Griffeinheit der, insbesondere handgeführten, Gartenbearbeitungsmaschine ausgebildet. Alternativ ist jedoch auch denkbar, dass die Bedienvorrichtung als eine Fernbedienvorrichtung ausgebildet ist. Unter einer "handgeführten Gartenbearbeitungsmaschine" soll in diesem Zusammenhang insbesondere eine direkt von einem Bediener geführte Gartenbearbeitungsmaschine verstanden werden. Vorzugsweise soll darunter insbesondere eine Gartenbearbeitungsmaschine verstanden werden, welche von einem Bediener zumindest teilweise direkt bewegt, insbesondere geschoben, wird. Hierbei kann die Gartenbearbeitungsmaschine einen als Unterstützungsantrieb ausgebildeten Antrieb zu einer Unterstützung des Bedieners bei einem Schieben der Gartenbearbeitungsmaschine über eine zu bearbeitende Fläche aufweisen. Insbesondere ist jedoch auch denkbar, dass die Gartenbearbeitungsmaschine unabhängig von einer direkten händischen Führung durch den Bediener, beispielweise mittels der als Fernbedienvorrichtung ausgebildeten Bedienvorrichtung, steuerbar ist. Weitere, einem Fachmann als sinnvoll erscheinende Ausgestaltungen der Gartenbearbeitungsmaschine sind ebenfalls denkbar, wie beispielsweise eine Ausgestaltung der Gartenbearbeitungsmaschine als Mulcher, als Rasenlüfter, als Vertikutierer, als Schneefräse, als Schiebe-Laubsauger, als Schubkarre usw.

Die, insbesondere handgeführte, Gartenbearbeitungsmaschine weist eine Antriebseinheit auf. Der Antrieb ist Teil der Antriebseinheit. Der Antrieb ist dazu vorgesehen, einen Vorschub der, insbesondere handgeführten, Gartenbearbeitungsmaschine zu erzeugen. Alternativ oder zusätzlich umfasst die Antriebseinheit einen weiteren Antrieb, welche zu einem Betrieb eines Mähwerkzeugs, beispielsweise eines Messers, einer Mähwerkeinheit vorgesehen ist. Die Betätigungseinheit ist insbesondere dazu vorgesehen, den, den Vortrieb erzeugenden Antrieb und/oder den das Mähwerkzeug antreibenden Antrieb anzusteuern, insbesondere zu aktivieren, zu deaktivieren und/oder eine Geschwindigkeit des Antriebs zu variieren. Insbesondere ist die Betätigungseinheit dazu vorgesehen, bei einer Betätigung durch einen Bediener eine Erzeugung des Vortriebs und/oder einen Betrieb des Mähwerkzeugs zu aktivieren und insbesondere die Erzeugung des Vortriebs und/oder den Betrieb des Mähwerkzeugs so lange aufrechtzuerhalten, so lange das Betätigungselement in einem bestimmten Positionsbereich festgehalten wird. Insbesondere ist die Betätigungseinheit dazu vorgesehen, bei einem Loslassen des Betätigungselements durch den Bediener die Erzeugung des Vortriebs und/oder den Betrieb des Mähwerkzeugs einzustellen. Unter "vorgesehen" soll insbesondere speziell programmiert, ausgelegt und/oder ausgestattet verstanden werden. Darunter, dass ein Objekt zu einer bestimmten Funktion vorgesehen ist, soll insbesondere verstanden werden, dass das Objekt diese bestimmte Funktion in zumindest einem Anwendungs- und/oder Betriebszustand erfüllt und/oder ausführt. Das Betätigungselement ist insbesondere als ein Betätigungsknopf, als ein Betätigungsschieber, als ein Drehgriff und/oder bevorzugt als ein Betätigungshebel ausgebildet. Insbesondere bildet die Betätigungseinheit eine Sicherheitsvorrichtung aus, welche dazu vorgesehen ist, eine Anwesenheit und/oder eine Konzentration eines Bedieners zu kontrollieren. Insbesondere ist die Bedieneinheit dazu vorgesehen, einen Betrieb der, insbesondere handgeführten, Gartenbearbeitungsmaschine zumindest im Wesentlichen zu unterbrechen, wenn eine Abwesenheit und/oder eine Unaufmerksamkeit des Bedieners, insbesondere hervorgerufen durch ein Loslassen des Betätigungselements, festgestellt wird. Unter der Wendung "beweglich gelagert" soll insbesondere linear verschiebbar gelagert, schwenkbar gelagert und/oder rotatorisch gelagert verstanden werden. Unter einem "Standby-Betriebszustand" eines Antriebs, insbesondere des den Vorschub erzeugenden Antriebs der, insbesondere handgeführten, Gartenbearbeitungsmaschine, soll insbesondere ein Betriebszustand verstanden werden, in welchem der Antrieb sich in einem Bereitschaftsbetrieb befindet. In dem Standby-Betriebszustand des Antriebs ist insbesondere eine eigentliche Nutzfunktion des Antriebs temporär deaktiviert, kann aber jederzeit und ohne Vorbereitungen oder längere Wartezeiten wieder aktiviert werden. Beispielsweise kann der Standby-Betriebszustand, insbesondere bei einer Verbrennungskraftmaschine, als ein Leerlaufbetrieb ausgebildet sein.

Unter einem "Einstellelement" soll in diesem Zusammenhang insbesondere ein Element verstanden werden, über welches, insbesondere von einem Bediener, Einstellungen getätigt werden können. Insbesondere ist das Einstellelement getrennt von der Betätigungseinheit, vorzugsweise dem Betätigungselement, ausgebildet. Vorzugsweise soll darunter insbesondere ein Element verstanden werden, das dazu vorgesehen ist, bei einem Einstellvorgang eine Eingabegröße von einem Bediener aufzunehmen. Vorzugsweise ist das Element dazu vorgesehen, insbesondere unmittelbar von einem Bediener kontaktiert zu werden, wobei eine Berührung des Einstellelements und/oder eine auf das Bedienelement ausgeübte Betätigungskraft und/oder eine von einem Bediener geänderte Stellung des Einstellelements sensiert und in einen Vorschubsunterstützungsparameter übersetzt wird. Vorzugsweise ist das Einstellelement dazu vorgesehen, verschiedene Einstellstufen und/oder -optionen, beispielsweise verschiedene konstante Geschwindigkeitsstufen bereitzustellen. Insbesondere umfassen die Geschwindigkeitsstufen Geschwindigkeiten zwischen 0 km/h und 7 km/h. Es ist zudem denkbar, dass die Geschwindigkeit kontinuierlich variierbar ist. Insbesondere ist das Einstellelement lediglich dazu vorgesehen, die Einstellung des Vorschubsunterstützungsparameters zu modifizieren, jedoch nicht dazu, einen anhand der Vorgaben des Vorschubsunterstützungsparameters gesteuerten Vorgang, beispielsweise den Vorschub der, insbesondere handgeführten, Gartenbearbeitungsmaschine, direkt auszulösen. Insbesondere ist das Einstellelement dazu vorgesehen eine Einstellung eines Parameters, insbesondere des Vorschubsunterstützungsparameters, zu ermöglichen, ohne dabei eine den Parameter anwendende, beispielsweise in eine Bewegung umsetzende, Funktion direkt zu aktivieren oder zu deaktivieren. Insbesondere wird die durch den Parameter einstellbare und/oder manipulierbare Funktion, beispielsweise die Bewegung, mittels eines von dem Einstellelement verschiedenen Elements, beispielsweise mittels des Betätigungselements, aktiviert, ausgeführt und/oder deaktiviert. Insbesondere erfordert die Aktivierung eines Vorschubs der, insbesondere handgeführten, Gartenbearbeitungsmaschine zusätzlich zu der Einstellung eines von null verschiedenen Vorschubsunterstützungsparameters zumindest eine Aktivierung des Betätigungselements. Unter dem "Vorschubsunterstützungsparameter" soll insbesondere eine durch den Antrieb erzeugte Geschwindigkeit der, insbesondere handgeführten, Gartenbearbeitungsmaschine und/oder eine durch den Antrieb der, insbesondere handgeführten, Gartenbearbeitungsmaschine erzeugte Vorschubkraft verstanden werden. Insbesondere umfasst der Begriff "Vorschub" eine Vorwärtsbewegung und/oder eine Rückwärtsbewegung der, insbesondere handgeführten, Gartenbearbeitungsmaschine.

Unter einem "selbsttätigen Zurücksetzen" soll insbesondere ein Zurücksetzen des durch das Einstellelement eingestellten Vorschubsunterstützungsparameters auf einen Wert verstanden werden, welcher einem Ausgangswert des Vorschubsunterstützungsparameters vor einer Inbetriebnahme der, insbesondere handgeführten, Gartenbearbeitungsmaschine entspricht. Insbesondere wird bei dem selbsttätigen Zurücksetzen der Vorschubsunterstützungsparameter auf einen Wert zurückgesetzt, bei dem die, insbesondere handgeführte, Gartenbearbeitungsmaschine frei ist von einer Vorschubsunterstützung. Insbesondere wird bei dem selbsttätigen Zurücksetzen der Vorschubsunterstützungsparameter auf einen Wert nahe null, vorzugsweise exakt null, zurückgesetzt. Insbesondere ist zu einer erneuten Erzeugung eines Vorschubs nach einem Zurücksetzen eine erneute Einstellung des Vorschubsunterstützungsparameters mittels des Einstellelements und eine erneute Aktivierung des Antriebs mittels des Betätigungselements notwendig. Insbesondere erfolgt das selbsttätige Zurücksetzen automatisiert in Folge einer Deaktivierung des Antriebs durch das Betätigungselement, d.h. beispielsweise in Folge eines Loslassens des Betätigungselements durch einen Bediener während eines Betriebs der, insbesondere handgeführten, Gartenbearbeitungsmaschine.

Durch die erfindungsgemäße Ausgestaltung der Bedienvorrichtung kann vorteilhaft eine Bediensicherheit erhöht werden, insbesondere indem bei einer Reaktivierung des Vorschubs im Zuge einer Deaktivierung durch ein Loslassen des Betätigungselements ein unkontrolliertes, ruckartiges und/oder überraschendes Beschleunigen der, insbesondere handgeführten, Gartenbearbeitungsmaschine vorteilhaft verhindert wird. Dadurch kann außerdem vorteilhaft ein Bedienkomfort erhöht werden. Des Weiteren kann durch die erfindungsgemäße Ausgestaltung eine vereinfachte Bedienung der, insbesondere handgeführten, Gartenbearbeitungsmaschine, insbesondere einer, insbesondere handgeführten, Gartenbearbeitungsmaschine mit einer Sicherheitsvorrichtung, welche eine Bedieneranwesenheit überprüft, erreicht werden, insbesondere indem auf ein manuelles Zurücksetzen des Vorschubsunterstützungsparameters bei der Reaktivierung des Vorschubs der, insbesondere handgeführten, Gartenbearbeitungsmaschine verzichtet werden kann.

Ferner wird vorgeschlagen, dass die Einstelleinheit bei einem Lösen des Betätigungselements, unabhängig von einer Einstellposition des Einstellelements, zu einem selbsttätigen Zurücksetzen des Vorschubsunterstützungsparameters des Einstellelements auf einen Ausgangswert, insbesondere einen Wert Null, vorgesehen ist. Dadurch kann vorteilhaft eine Bediensicherheit und/oder ein Bedienkomfort erhöht werden, insbesondere indem bei einer Reaktivierung des Vorschubs im Zuge einer Deaktivierung durch ein Loslassen des Betätigungselements ein unkontrolliertes, ruckartiges und/oder überraschendes Beschleunigen der, insbesondere handgeführten, Gartenbearbeitungsmaschine vorteilhaft verhindert wird und/oder indem auf ein manuelles Zurücksetzen des Vorschubsunterstützungsparameters bei der Reaktivierung des Vorschubs der, insbesondere handgeführten, Gartenbearbeitungsmaschine verzichtet werden kann. Unter einem "Lösen des Betätigungselements" soll insbesondere indirektes Lösen des Betätigungselements, beispielsweise durch ein Loslassen des Betätigungselements und ein dadurch ausgelöstes selbsttätiges Zurückspringen des Betätigungselements in einen Ausgangszustand und/oder ein direktes Lösen des Betätigungselements durch ein aktives Bewegen des Betätigungselements in die Ausgangsposition verstanden werden. Die Ausgangsposition ist in diesem Zusammenhang insbesondere eine Position des Betätigungselements, welche dazu vorgesehen ist, eine Funktion der, insbesondere handgeführten, Gartenbearbeitungsmaschine zu deaktivieren. Der Ausgangswert ist insbesondere als ein Wert ausgebildet, in welchem die durch den Vorschubsunterstützungsparameter manipulierte Funktion der, insbesondere handgeführten, Gartenbearbeitungsmaschine sich in einem deaktivierten Zustand befindet. Alternativ oder zusätzlich ist denkbar, dass der Ausgangszustand durch einen Bediener einstellbar und/oder verstellbar ist.

Des Weiteren wird vorgeschlagen, dass die Einstelleinheit bei einer Betätigung des Betätigungselements dazu vorgesehen ist, eine aktuelle Einstellposition des Einstellelements als eine Ausgangsstellung, insbesondere als eine Null-Wert-Stellung, zu definieren. Dadurch kann vorteilhaft eine Bediensicherheit erhöht werden, insbesondere indem sichergestellt werden kann, dass der Vorschubsunterstützungsparameter bei einem Start der durch das Betätigungselement aktivierbaren Funktion immer den Wert Null annimmt. Dadurch kann vorteilhaft bei einer Reaktivierung des Vorschubs im Zuge einer Deaktivierung durch ein Loslassen des Betätigungselements ein unkontrolliertes, ruckartiges und/oder überraschendes Beschleunigen der, insbesondere handgeführten, Gartenbearbeitungsmaschine vorteilhaft verhindert werden. Zudem kann dadurch vorteilhaft auf ein physisches Zurückstellen, insbesondere Zurückdrehen, des Einstellelements verzichtet werden, wodurch beispielsweise eine Komplexität reduziert werden kann, da vorteilhaft auf das Einstellelement rückstellende Elemente verzichtet werden kann. Unter einer "Einstellposition" soll insbesondere eine Rotationsposition des Einstellelements verstanden werden. Unter einer "Ausgangsstellung" des Einstellelements soll insbesondere eine Stellung des Einstellelements verstanden werden, welche dazu führt, dass der Antrieb keinen Vorschub erzeugt. In der Null-Wert-Stellung nimmt insbesondere der Vorschubsunterstützungsparameter einen Wert Null an.

Zudem wird vorgeschlagen, dass das Einstellelement von einer Drehhülse, insbesondere einem Drehgriff, gebildet ist. Dadurch kann vorteilhaft eine einfache und/oder intuitive Bedienung des Einstellelements ermöglicht werden. Insbesondere ist eine Bedienung der Drehhülse und/oder des Drehgriffs vergleichbar mit einer Bedienung eines Gashebels bei einem Kraftrad, wie beispielsweise einem Motorrad. Insbesondere erzeugt eine Rotation des Einstellelements in eine von einem Bediener wegweisende Richtung eine Verringerung des Vorschubs. Insbesondere erzeugt eine Rotation des Einstellelements in eine auf einen Bediener hinweisende Richtung eine Erhöhung des Vorschubs. Alternativ können die Rotationsrichtungen des Einstellelements zur Erhöhung oder Verringerung des Vorschubs auch umgekehrt verlaufen. Alternativ ist denkbar, dass der Antrieb keine unterstützte Rückwärtsbewegung zulässt. Es ist denkbar, dass eine Rückwärtsbewegung nur manuell durch einen Bediener möglich ist, insbesondere vorausgesetzt der Vorschub ist ausgeschaltet oder auf einer niedrigen Stufe (beispielsweise unterhalb von 3 km/h). Insbesondere ist dabei denkbar, dass zu einem Erreichen einer bestimmten Geschwindigkeit in eine rückwärtsgewandte Richtung ein größerer, insbesondere zumindest doppelt, dreifach oder vierfach so großer, Rotationswinkel der Drehhülse erforderlich ist als zu einem Erreichen derselben Geschwindigkeit in eine vorwärtsgewandte Richtung. Dadurch kann eine Bedienersicherheit vorteilhaft weiter erhöht werden. Insbesondere ist die Einstelleinheit zumindest teilweise einstückig mit einer Griffeinheit der, insbesondere handgeführten, Gartenbearbeitungsmaschine ausgebildet, welche zumindest dazu vorgesehen ist, eine Handfläche eines Bedieners bei einem Betrieb der, insbesondere handgeführten, Gartenbearbeitungsmaschine abzustützen. Darunter, dass zwei Einheiten "teilweise einstückig" ausgebildet sind, soll insbesondere verstanden werden, dass die Einheiten zumindest ein, insbesondere zumindest zwei, vorteilhaft zumindest drei gemeinsame Elemente aufweisen, die Bestandteil, insbesondere funktionell wichtiger Bestandteil, beider Einheiten sind.

Außerdem wird vorgeschlagen, dass das Einstellelement anschlagsfrei ausgebildet ist. Dadurch kann vorteilhaft eine Komplexität verringert werden, insbesondere da vorteilhaft auf das Einstellelement rückstellende Elemente verzichtet werden kann. Zudem kann vorteilhaft ein besonders hoher Bedienkomfort erreicht werden, da eine Notwendigkeit einer Überprüfung eines Einstellzustands des Einstellelements durch den Bediener vorteilhaft entfallen kann. Unter "anschlagsfrei" soll insbesondere verstanden werden, dass das Einstellelement um zumindest mehr als 360° rotiert werden kann. Insbesondere ist dadurch möglich, dass das Einstellelement um einen Winkel verdreht wird, welcher oberhalb eines Winkels liegt, welcher einer Maximalgeschwindigkeit entspricht. Die weitere Rotation erzeugt dabei insbesondere auch trotz des fehlenden Anschlags keine weitere Geschwindigkeitserhöhung

Zusätzlich wird vorgeschlagen, dass die Einstelleinheit zumindest ein Untersetzungsgetriebe und/oder einen Direktantrieb und zumindest ein über das Untersetzungsgetriebe und/oder den Direktantrieb mit dem Einstellelement gekoppeltes Erfassungselement aufweist, das zu einer Erfassung einer aktuellen Einstellposition, einer aktuellen Betätigungsrichtung, insbesondere einer aktuellen Rotationsrichtung, des Einstellelements und/oder einer aktuellen Betätigungsgeschwindigkeit, insbesondere einer aktuellen Rotationsgeschwindigkeit, des Einstellelements vorgesehen ist. Dadurch kann vorteilhaft eine besonders genaue Einstellung und/oder Regelung, insbesondere des Vorschubsunterstützungsparameters ermöglicht werden, wodurch insbesondere im Fall des Schiebe-Rasenmähers ein besonders präzises Rasenmähen, insbesondere im Bereich von Rasenkanten oder Blumenbeeten, ermöglicht werden kann. Unter einem "Untersetzungsgetriebe" soll insbesondere ein Getriebe verstanden werden, dessen Verhältnis aus Antriebs- und Abtriebsdrehzahl kleiner ist als Eins. Das Erfassungselement umfasst insbesondere ein Potentiometer und/oder einen Drehwiderstand. Alternativ ist denkbar, dass die Einstelleinheit frei von einer Getriebeeinheit ausgebildet ist. Die frei von einer Getriebeeinheit ausgebildete Einstelleinheit bildet demnach den Direktantrieb aus.

Wenn das Erfassungselement von einem Drehgeber gebildet ist, kann vorteilhaft eine besonders zuverlässige und einfache Bestimmungsmethode zur Bestimmung der aktuellen Einstellposition erreicht werden. Insbesondere ist der Drehgeber als ein Inkrementalgeber ausgebildet. Alternativ kann der Drehgeber auch als ein Absolutwertgeber ausgebildet sein. Es ist denkbar, dass ein gesamter Bereich an möglichen Geschwindigkeiten in eine Richtung über einen Rotationsbereich von 0° bis 360° oder von 30° bis 360° des Einstellelements verteilt ist. Der Drehgeber ist insbesondere dazu vorgesehen, in regelmäßigen Abständen, beispielsweise in Abständen von 1 ms die aktuelle Einstellposition des Einstellelements zu überprüfen. Dadurch kann vorteilhaft eine besonders kurze Reaktionszeit erreicht werden.

Weiterhin wird vorgeschlagen, dass die Betätigungseinheit zumindest ein zweites Betätigungselement aufweist, welches in einem betätigten Zustand des ersten Betätigungselements zu einer Aktivierung und/oder Deaktivierung einer Mähwerkeinheit der, insbesondere handgeführten, Gartenbearbeitungsmaschine vorgesehen ist. Dadurch kann vorteilhaft eine besonders große Zahl an zur Verfügung stehenden Betriebszuständen erhalten werden. Vorteilhaft kann eine unterstützte Bewegung der, insbesondere handgeführten, Gartenbearbeitungsmaschine unabhängig von einer Aktivierung des Mähwerkzeugs ermöglicht werden. Beispielsweise kann dadurch ein Ansteuern eines zu bearbeitenden Bereichs eines Gartens erleichtert werden. Das zweite Betätigungselement ist insbesondere getrennt von dem Betätigungselement ausgebildet. Das zweite Betätigungselement ist insbesondere als ein Hebel, als ein Schieberegler, als ein Drehregler und/oder bevorzugt als ein Druckknopf ausgebildet. Insbesondere ist eine Betätigung des zweiten Betätigungselements unterbunden und/oder wirkungslos solange das Betätigungselement nicht aktiviert, vorzugsweise nicht durch den Bediener in der aktivierten Position festgehalten ist. Insbesondere ist die Mähwerkeinheit nur dann in Betrieb, wenn beide Betätigungselemente aktiviert sind. Insbesondere stoppt ein Mähwerkzeug der Mähwerkeinheit seinen Betrieb sobald das Betätigungselement deaktiviert ist, insbesondere das Betätigungselement losgelassen wird, insbesondere unabhängig von dem Aktivierungszustand des zweiten Betätigungselements. Eine Reaktivierung des Mähwerkzeugs nach einem Loslassen erfordert insbesondere erneut ein Betätigen des Betätigungselements und des zweiten Betätigungselements.

Außerdem wird vorgeschlagen, dass das zweite Betätigungselement mit einem Mikrokontroller gekoppelt ist, wobei der Mikrokontroller und der Drehgeber zumindest teilweise auf einer gemeinsamen Platine angeordnet sind. Dadurch kann vorteilhaft eine besonders kompakte, kostengünstige und/oder niederkomplexe Bauweise ermöglicht werden. Insbesondere bildet der Mikrokontroller ein Ein-Chip-Computersystem aus. Insbesondere ist der Mikrokontroller ein Halbleiterchip, welcher einen Prozessor und Peripheriefunktionen umfasst. Insbesondere umfasst der Mikrokontroller einen Arbeits- und Programmspeicher. Darunter, dass zwei Elemente "teilweise auf einer gemeinsamen Platine" angeordnet sind soll in diesem Zusammenhang insbesondere verstanden werden, dass jeweils zumindest eine Teilkomponente jedes der Elemente Bestandteil, insbesondere funktionell wichtiger Bestandteil, der Platine sind. Insbesondere ist zumindest eine Signalempfangseinheit des Drehgebers zu einem Empfang von Ausgangssignalen des Drehgebers und/oder eine Signalauswerteeinheit des Drehgebers zu einer Auswertung der Ausgangsignale des Drehgebers auf der Platine angeordnet.

Ferner wird eine, insbesondere handgeführte, Gartenbearbeitungsmaschine, insbesondere ein Schiebe-Rasenmäher, vorgeschlagen, mit einer Grundeinheit, die eine Mähwerkeinheit zu einer Bearbeitung einer Arbeitsfläche, insbesondere einer Grünfläche, und einen Antrieb aufweist, welcher dazu vorgesehen ist, während eines Betriebs eine Vorschubsunterstützung der Grundeinheit bereitzustellen, mit einer Führungseinheit und mit der an der Führungseinheit angeordneten Bedienvorrichtung. Dadurch kann vorteilhaft eine, insbesondere handgeführte, Gartenbearbeitungsmaschine mit einer hohen Bediensicherheit und mit einem vorteilhaft hohen Bedienkomfort erreicht werden. In diesem Zusammenhang soll unter einer "Grundeinheit" insbesondere eine Einheit verstanden werden, welche sich während eines Betriebs zumindest im Wesentlichen direkt, insbesondere über Räder oder dergleichen, auf einer zu bearbeitenden Fläche abstützt. Vorzugsweise wird die Einheit während eines Betriebs insbesondere von einem Bediener mittels der Führungseinheit über die zu bearbeitende Fläche bewegt. Besonders bevorzugt weist die Grundeinheit insbesondere eine Bearbeitungseinheit, wie insbesondere eine Mäheinheit, auf, welche zu einer Bearbeitung der zu bearbeitenden Fläche vorgesehen ist. Des Weiteren soll in diesem Zusammenhang unter einer "Führungseinheit" insbesondere eine Einheit verstanden werden, welche während eines Betriebs zumindest teilweise direkt von einem Bediener zu einer Führung der Gartenbearbeitungsmaschine kontaktiert wird. Vorzugsweise soll darunter insbesondere eine Einheit verstanden werden, über welche die Grundeinheit der Gartenbearbeitungsmaschine während eines Betriebs regulär bewegt, insbesondere geschoben und/oder gelenkt, wird. Besonders bevorzugt weist die Führungseinheit zu einer Kontaktierung durch den Bediener einen Handgriff, insbesondere eine Griffstange, auf. Die Antriebseinheit umfasst insbesondere einen elektrischen Antriebsmotor oder einen Verbrennungsmotor.

Des Weiteren wird ein Verfahren zu einem Betrieb der, insbesondere handgeführten, Gartenbearbeitungsmaschine, vorgeschlagen, wobei die, insbesondere handgeführte, Gartenbearbeitungsmaschine die Bedienvorrichtung aufweist, welche die Einstelleinheit umfasst, welche wiederum zumindest ein Einstellelement zur Einstellung des Vorschubsunterstützungsparameters und zumindest das mit dem Einstellelement gekoppelte Erfassungselement aufweist, das zur Erfassung der aktuellen Einstellposition, einer aktuellen Betätigungsrichtung des Einstellelements und/oder einer aktuellen Betätigungsgeschwindigkeit des Einstellelements vorgesehen ist, wobei in zumindest einem Erfassungsschritt eine Sequenz von Ausgabesignalen des Erfassungselements erfasst wird und in zumindest einem Auswerteschritt abhängig von einer Sequenz von Ausgabesignalen des Erfassungselements auf eine Drehrichtung des Einstellelements rückgeschlossen wird. Dadurch kann insbesondere eine besonders vorteilhafte, eine besonders einfache und/oder eine besonders intuitive Bedienung der Bedienvorrichtung ermöglicht werden.

Insbesondere umfasst das Erfassungselement zumindest zwei Sensorelemente, welche vorzugsweise um eine Drehachse des Einstellelements rotatorisch versetzt zueinander angeordnet sind. Insbesondere erzeugt jedes der Sensorelemente bei einer Rotation des Einstellelements jeweils ein Ausgabesignal (beispielsweise einen Rechteckpuls), welches vorzugsweise mit einer Wiederholrate von zumindest 1000 Hz abgetastet wird. Die Ausgabesignale sind insbesondere zueinander elektrisch phasenverschoben. Insbesondere gibt ein erstes Sensorelement das Ausgabesignal A ab und das zweite Sensorelement das Ausgabesignal B. Insbesondere ist anhand der Abfolge der Ausgabesignale, d.h. abhängig davon, ob das Ausgabesignal A dem Ausgabesignal B nacheilt oder vorauseilt, feststellbar, in welche Rotationsrichtung das Einstellelement bewegt wird. Zudem ist vorteilhaft aus einer Frequenz der Ausgabesignale A und/oder B eine Rotationsgeschwindigkeit des Einstellelements ableitbar. Insbesondere bildet eine Folge von Ausgabesignalen A und B eine Sequenz von Ausgabesignalen aus.

Zudem wird vorgeschlagen, dass in zumindest einem Einstellschritt, abhängig von einer Drehrichtung des Einstellelements der Vorschubsunterstützungsparameter erhöht oder verringert wird. Dadurch kann insbesondere eine besonders vorteilhafte, eine besonders einfache und/oder eine besonders intuitive Bedienung der Bedienvorrichtung ermöglicht werden. Insbesondere wird der Vorschubsunterstützungsparameter bei einer Rotation des Einstellelements in eine erste Drehrichtung, beispielsweise in eine Vorwärtsdrehrichtung, erhöht und bei einer Rotation des Einstellelements in eine der ersten Drehrichtung entgegengesetzte zweite Drehrichtung, beispielsweise in eine Rückwärtsdrehrichtung, verringert.

Weiterhin wird vorgeschlagen, dass in dem zumindest einen Einstellschritt, abhängig von einer Drehgeschwindigkeit des Einstellelements ein Änderungsfaktor zu einer Veränderung des Vorschubsunterstützungsparameters eingestellt wird. Dadurch kann insbesondere eine besonders vorteilhafte, eine besonders einfache und/oder eine besonders intuitive Bedienung der Bedienvorrichtung ermöglicht werden. Zudem kann dadurch vorteilhaft eine kurze Reaktionszeit ermöglicht werden. Insbesondere wird der Vorschubsunterstützungsparameter umso schneller erhöht, umso schneller das Einstellelement in die erste Drehrichtung gedreht wird. Insbesondere wird der Vorschubsunterstützungsparameter umso schneller reduziert, umso schneller das Einstellelement in die der ersten Drehrichtung entgegengesetzte zweite Drehrichtung gedreht wird. Insbesondere ist der Änderungsfaktor umso größer, umso schneller das Einstellelement in die erste Drehrichtung oder in die zweite Drehrichtung gedreht wird. Insbesondere ist der Änderungsfaktor umso kleiner, umso weniger schnell das Einstellelement in die erste Drehrichtung oder in die zweite Drehrichtung gedreht wird.

Zusätzlich wird vorgeschlagen, dass die Einstelleinheit der Bedienvorrichtung bei einem Lösen des Betätigungselements den Vorschubsunterstützungsparameter des Einstellelements selbsttätig auf den Ausgangswert zurücksetzt. Dadurch kann vorteilhaft eine Bediensicherheit erhöht werden, insbesondere indem bei einer Reaktivierung des Vorschubs im Zuge einer Deaktivierung durch ein Loslassen des Betätigungselements ein unkontrolliertes, ruckartiges und/oder überraschendes Beschleunigen der, insbesondere handgeführten, Gartenbearbeitungsmaschine vorteilhaft verhindert wird. Dadurch kann außerdem vorteilhaft ein Bedienkomfort erhöht werden. Des Weiteren kann eine vereinfachte Bedienung der, insbesondere handgeführten, Gartenbearbeitungsmaschine erreicht werden, insbesondere indem auf ein manuelles Zurücksetzen des Vorschubsunterstützungsparameters verzichtet werden kann. Insbesondere wird der Vorschubsunterstützungsparameter elek-tronisch zurückgesetzt. Insbesondere wird der Vorschubsunterstützungsparameter mittels einer Zurücksetzfunktion einer Firmware, welche dazu vorgesehen ist, Signale des Erfassungselements und/oder Signale des Betätigungselements zu registrieren, zu verarbeiten und in Steuer- und/oder Regelbefehle, beispielsweise an den, den Vorschub erzeugenden Antrieb und/oder das Mähwerkzeug, auszusenden. Insbesondere bildet die Firmware zumindest einen Teil eines Betriebsprogramms einer Steuer- und/oder Regeleinheit der Bedieneinheit. Unter einer "Steuer- und/oder Regeleinheit" soll insbesondere eine Einheit mit zumindest einer Steuerelektronik verstanden werden. Unter einer "Steuerelektronik" soll insbesondere eine Einheit mit einer Prozessoreinheit und mit einer Speichereinheit sowie mit dem in der Speichereinheit gespeicherten Betriebsprogramm verstanden werden.

Die erfindungsgemäße Bedienvorrichtung, die erfindungsgemäße, insbesondere handgeführte, Gartenbearbeitungsmaschine und das erfindungsgemäße Verfahren sollen hierbei nicht auf die oben beschriebene Anwendung und Ausführungsform beschränkt sein, sondern werden durch die beigefügten Ansprüche definiert.

Zudem sollen bei den in dieser Offenbarung angegebenen Wertebereichen auch innerhalb der genannten Grenzen liegende Werte als offenbart und als beliebig einsetzbar gelten.

### Zeichnung

Weitere Vorteile ergeben sich aus der folgenden Zeichnungsbeschreibung. In der Zeichnung ist ein Ausführungsbeispiel der Erfindung dargestellt. Die Zeichnung, die Beschreibung und die Ansprüche enthalten zahlreiche Merkmale in Kombination. Der Fachmann wird die Merkmale zweckmäßigerweise auch einzeln betrachten und zu sinnvollen weiteren Kombinationen zusammenfassen.

Es zeigen:
- Fig. 1: eine, insbesondere handgeführte, Gartenbearbeitungsmaschine mit einer Bedienvorrichtung in einer schematischen Seitenansicht,
- Fig. 2: die Bedienvorrichtung in einer schematischen, perspektivischen Ansicht,
- Fig. 3: eine schematische Ansicht eines Teils der Bedienvorrichtung in einer Explosionsdarstellung,
- Fig. 4: eine schematische perspektivische Ansicht eines Gehäuses eines als Drehgeber ausgebildeten Erfassungselements einer Einstelleinheit der Bedienvorrichtung,
- Fig. 5: eine schematische perspektivische Ansicht eines als Drehhülse ausgebildeten Einstellelements der Einstelleinheit,
- Fig. 6: ein Getriebezahnrad eines Untersetzungsgetriebes der Einstelleinheit,
- Fig. 7: eine schematische Ansicht einer Platine einer Steuer- und/oder Regeleinheit der, insbesondere handgeführten, Gartenbearbeitungsmaschine und
- Fig. 8: ein Ablaufdiagramm eines Verfahrens zu einem Betrieb der, insbesondere handgeführten, Gartenbearbeitungsmaschine mit der Bedienvorrichtung.

### Beschreibung des Ausführungsbeispiels

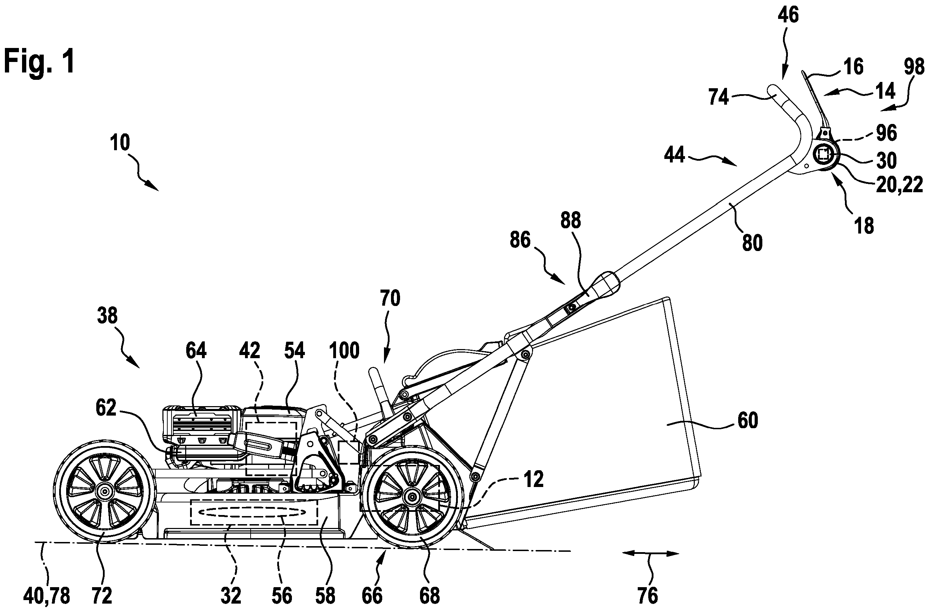

Fig. 1 zeigt eine, insbesondere handgeführte, Gartenbearbeitungsmaschine 10. Die, insbesondere handgeführte, Gartenbearbeitungsmaschine 10 ist als Rasenmäher ausgebildet. Die, insbesondere handgeführte, Gartenbearbeitungsmaschine 10 ist hierbei als elektrisch betreibbarer Rasenmäher ausgebildet, der von einem Bediener vor sich her bewegbar ist. Somit ist die, insbesondere handgeführte, Gartenbearbeitungsmaschine 10 als sogenannter Schiebe-Rasenmäher ausgebildet. Grundsätzlich ist jedoch auch eine andere, einem Fachmann als sinnvoll erscheinende Ausbildung denkbar. Die, insbesondere handgeführte, Gartenbearbeitungsmaschine 10 weist eine Grundeinheit 38 auf. Die Grundeinheit 38 ist während eines Betriebs insbesondere dazu vorgesehen, direkt über eine Arbeitsfläche 40 geführt zu werden.

Die, insbesondere handgeführte, Gartenbearbeitungsmaschine 10 weist eine Antriebseinheit 70 auf. Die Antriebseinheit 70 umfasst einen Antrieb 42. Die, insbesondere handgeführte, Gartenbearbeitungsmaschine 10 weist den Antrieb 42 auf. Die Grundeinheit 38 der, insbesondere handgeführten, Gartenbearbeitungsmaschine 10 weist den Antrieb 42 auf. Der Antrieb 42 ist von einem Elektromotor gebildet. Ferner umfasst die, insbesondere handgeführte, Gartenbearbeitungsmaschine 10 zumindest eine Motorgehäuseeinheit 54 zu einer Aufnahme und zu einer Lagerung des Antriebs 42 der, insbesondere handgeführten, Gartenbearbeitungsmaschine 10. Die Grundeinheit 38 weist die Motorgehäuseeinheit 54 auf.

Ferner umfasst die, insbesondere handgeführte, Gartenbearbeitungsmaschine 10 zumindest eine, einem Fachmann bereits bekannte Mähwerkeinheit 32 zu einer Bearbeitung der Arbeitsfläche 40. Die Arbeitsfläche 40 ist bevorzugt eine Grünfläche. Die Grundeinheit 38 weist die Mähwerkeinheit 32 auf. Die Mähwerkeinheit 32 ist dazu vorgesehen, auf der Arbeitsfläche 40 wachsendes Gras zu mähen. Die Mähwerkeinheit 32 weist ein Mähwerkzeug 56 auf. Das Mähwerkzeug 56 ist als ein rotierbares Messer ausgebildet. Zu einem Mähen ist die Mähwerkeinheit 32 von dem Antrieb 42 der, insbesondere handgeführten, Gartenbearbeitungsmaschine 10 antreibbar. Der Antrieb 42 der Mähwerkeinheit 32 und ein den Vorschub erzeugender Antrieb 12 der, insbesondere handgeführten, Gartenbearbeitungsmaschine 10 sind getrennt voneinander ausgebildet. Alternativ ist denkbar, dass der Antrieb 42 der Mähwerkeinheit 32 und der den Vorschub erzeugende Antrieb 12 zumindest teilweise einstückig ausgebildet sind. Die Mähwerkeinheit 32 kann hierbei direkt von dem Antrieb 42 antreibbar ausgebildet sein oder die, insbesondere handgeführte, Gartenbearbeitungsmaschine 10 umfasst zumindest eine nicht näher dargestellte Getriebeeinheit, die mit dem Antrieb 42 und der Mähwerkeinheit 32 zusammenwirkt, insbesondere antriebstechnisch mit dem Antrieb 42 und der Mähwerkeinheit 32 verbunden ist. Die Getriebeeinheit kann in einer separaten Getriebegehäuseeinheit der, insbesondere handgeführten, Gartenbearbeitungsmaschine 10 oder in der Motorgehäuseeinheit 54 angeordnet sein.

Die, insbesondere handgeführte, Gartenbearbeitungsmaschine 10 umfasst ferner eine Abtragabtransporteinheit 58, die einen Schneidraum umfasst, in dem das, einem Fachmann bereits bekannte Mähwerkzeug 56 der Mähwerkeinheit 32 zu einem Schneiden von Gras antreibbar angeordnet ist. Die Grundeinheit 38 weist die Abtragabtransporteinheit 58 auf. Die Mähwerkeinheit 32 ist somit im Schneidraum der Abtragabtransporteinheit 58 angeordnet. Der Schneidraum ist direkt angrenzend an eine Grasauswurföffnung der Abtragabtransporteinheit 58 angeordnet. Die Grasauswurföffnung mündet in eine abnehmbare Grasauffangvorrichtung 60 der, insbesondere handgeführten, Gartenbearbeitungsmaschine 10 zu einem Auffangen und/oder Sammeln von abgetragenem Grünschnitt, insbesondere von Gras. Die Grasauffangvorrichtung 60 ist an der Grundeinheit 38 der, insbesondere handgeführten, Gartenbearbeitungsmaschine 10 lösbar angeordnet.

Des Weiteren umfasst die, insbesondere handgeführte, Gartenbearbeitungsmaschine 10 zumindest eine Energiespeicherschnittstelle 62 zu einer lösbaren Verbindung mit zumindest einer Energiespeichereinheit 64. Die Grundeinheit 38 weist die Energiespeicherschnittstelle 62 auf. Die Energiespeichereinheit 64 ist hierbei als Akkumulator ausgebildet. Die Energiespeicherschnittstelle 62 ist an der Motorgehäuseeinheit 54 angeordnet. Hierbei weist die Energiespeicherschnittstelle 62 zumindest zwei als Verbindungsführungsschienen ausgebildete, nicht näher dargestellte Schnittstellenelemente auf, die eine, einem Fachmann bereits bekannte Ausgestaltung aufweisen. Zudem umfasst die Energiespeicherschnittstelle 62 zumindest zwei nicht näher dargestellte Kontaktelemente zu einer elektrischen Verbindung mit nicht näher dargestellten Gegenkontaktelementen der Energiespeichereinheit 64. Die Energiespeicherschnittstelle 62 umfasst ferner zumindest ein nicht näher dargestelltes Fixierungselement, das dazu vorgesehen ist, die Energiespeichereinheit 64 zumindest in einem an der Energiespeicherschnittstelle 62 angeordneten Zustand mittels einer formschlüssigen und/oder kraftschlüssigen Verbindung zu befestigen.

Zu einer Bewegung der, insbesondere handgeführten, Gartenbearbeitungsmaschine 10 auf der Arbeitsfläche 40 weist die, insbesondere handgeführte, Gartenbearbeitungsmaschine 10 zumindest eine Fahrwerkseinheit 66 auf. Die Fahrwerkseinheit 66 ist an der Grundeinheit 38 angeordnet. Die Fahrwerkseinheit 66 trägt die Grundeinheit 38. Die Fahrwerkseinheit 66 umfasst hierbei zumindest zwei Antriebsräder 68 (in Fig. 1 ist lediglich eines der zwei Antriebsräder 68 sichtbar). Ferner weist die, insbesondere handgeführte, Gartenbearbeitungsmaschine 10, insbesondere die Antriebseinheit 70 der, insbesondere handgeführten, Gartenbearbeitungsmaschine 10, den Antrieb 12 auf. Der Antrieb 12 ist von einem Elektromotor gebildet. Der Antrieb 12 ist zu einer angetriebenen Fortbewegung der, insbesondere handgeführten, Gartenbearbeitungsmaschine 10 vorgesehen. Der Antrieb 12 ist zu einem Antrieb der Antriebsräder 68 vorgesehen. Der Antrieb 12 ist dazu vorgesehen, während eines Betriebs eine Vorschubsunterstützung der Grundeinheit 38 bereitzustellen. Mittels der Vorschubsunterstützung der Grundeinheit 38 wird ein Bediener während eines Betriebs der, insbesondere handgeführten, Gartenbearbeitungsmaschine 10 bei einem Schieben der, insbesondere handgeführten, Gartenbearbeitungsmaschine 10 zumindest unterstützt.

Es ist es denkbar, dass die, insbesondere handgeführte, Gartenbearbeitungsmaschine 10 eine nicht näher dargestellte Antriebsgetriebeeinheit umfasst, mittels derer eine Antriebsdrehzahl und/oder ein Antriebsdrehmoment der Antriebsräder 68 einstellbar sind/ist. Ferner umfasst die Fahrwerkseinheit 66 zumindest ein unangetriebenes Rad 72, insbesondere zumindest zwei unangetriebene Räder 72, wovon in der Fig. 1 lediglich eines dargestellt ist. Es ist jedoch auch denkbar, dass das Rad 72, insbesondere die Räder 72, ebenfalls mittels des Antriebs 12 antreibbar ausgebildet sind.

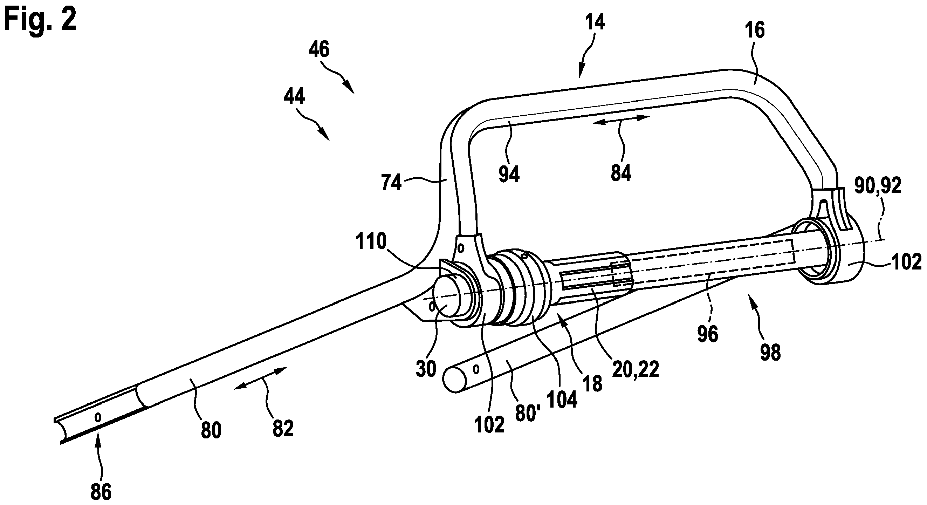

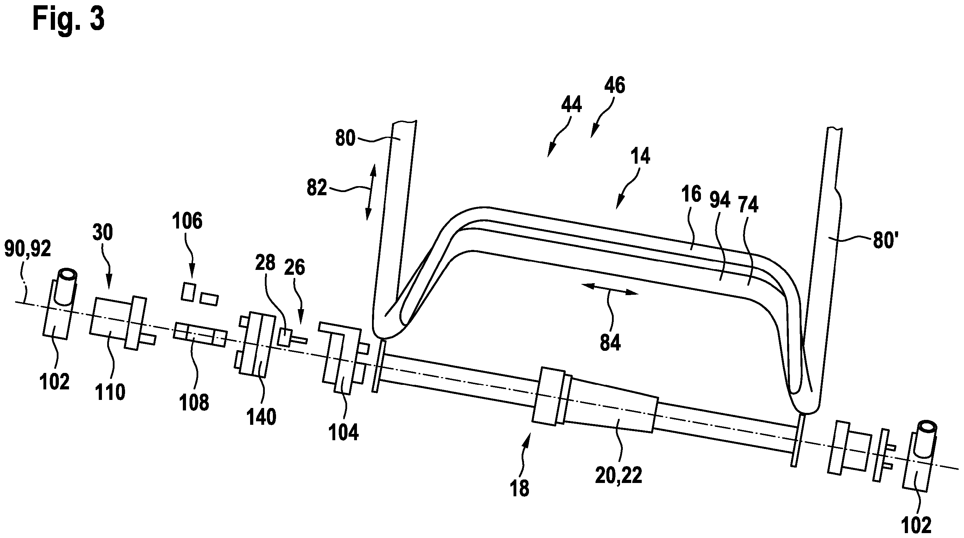

Ferner weist die, insbesondere handgeführte, Gartenbearbeitungsmaschine 10 eine Führungseinheit 44 auf (vgl. auch Fig. 2 und 3). Die Führungseinheit 44 ist zu einer direkten Führung der, insbesondere handgeführten, Gartenbearbeitungsmaschine 10 vorgesehen. Mittels der Führungseinheit 44 wird die, insbesondere handgeführte, Gartenbearbeitungsmaschine 10 während eines Betriebs regulär bewegt, insbesondere geschoben. Die Führungseinheit 44 ist im Wesentlichen U-förmig ausgebildet, wobei die beiden Enden an der Grundeinheit 38 befestigt sind. Die Führungseinheit 44 weist einen Handgriff 74 auf. Der Handgriff 74 ist von einer Griffstange gebildet. Der Handgriff 74 ist teilweise bügelförmig ausgebildet. Der Handgriff 74 ist während eines Betriebs der, insbesondere handgeführten, Gartenbearbeitungsmaschine 10 zu einer Kontaktierung durch den Bediener vorgesehen. Der Handgriff 74 erstreckt sich im Wesentlichen senkrecht zu einer Haupterstreckungsrichtung 76 der, insbesondere handgeführten, Gartenbearbeitungsmaschine 10. Eine Haupterstreckungsrichtung 84 des Handgriffs 74 erstreckt sich senkrecht zu der Haupterstreckungsrichtung 76 der, insbesondere handgeführten, Gartenbearbeitungsmaschine 10. Unter einer "Haupterstreckungsrichtung" eines Objekts soll dabei insbesondere eine Richtung verstanden werden, welche parallel zu einer längsten Kante eines kleinsten geometrischen Quaders verläuft, welcher das Objekt gerade noch vollständig umschließt. Die Haupterstreckungsrichtung 76 der, insbesondere handgeführten, Gartenbearbeitungsmaschine 10 erstreckt sich im Wesentlichen parallel zu einer vorgesehenen Geradeausrichtung der, insbesondere handgeführten, Gartenbearbeitungsmaschine 10. Der Handgriff 74 erstreckt sich parallel zu einer Standebene 78 der, insbesondere handgeführten, Gartenbearbeitungsmaschine 10. Ferner weist die Führungseinheit 44 zwei Führungsstangen 80, 80' auf. Die Führungsstangen 80, 80' sind im Wesentlichen stangenförmig ausgebildet. Die Führungsstangen 80, 80' bestehen im Wesentlichen aus Rohren. Die Rohre weisen beispielhaft einen Durchmesser von 26 mm auf. Es sind verschiedene, einem Fachmann als sinnvoll erscheinende Materialien denkbar, wie beispielsweise ein Kohlefaserverbundwerkstoff, Kunststoff oder Metall. Die Führungsstangen 80, 80' schließen jeweils an den beiden gegenüberliegenden Enden des Handgriffs 74 an den Handgriff 74 an. Die Führungsstangen 80, 80' erstrecken sich im Wesentlichen senkrecht zu dem Handgriff 74. Eine Haupterstreckungsrichtung 82 der Führungsstangen 80, 80' erstreckt sich jeweils im Wesentlichen senkrecht zu der Haupterstreckungsrichtung 84 des Handgriffs 74. Die Führungsstangen 80, 80' erstrecken sich von dem Handgriff 74 zu der Grundeinheit 38. Die Führungsstangen 80, 80' bilden jeweils an einem dem Handgriff 74 abgewandten Ende einen Anschlussbereich 86 zu der Grundeinheit 38. In dem Anschlussbereich 86 sind die Führungsstangen 80, 80' in einem montierten Zustand der Führungseinheit 44 jeweils in Fixieraufnahmen 88 der Grundeinheit 38 eingeschoben und fixiert. Die Führungsstangen 80, 80' sind in einem Winkel von mehr als 20°, vorzugsweise von mehr als 25° und bevorzugt von mehr als 30° gegenüber der Standebene 78 der, insbesondere handgeführten, Gartenbearbeitungsmaschine 10 angewinkelt. Die Führungsstangen 80, 80' weisen besonders bevorzugt einen Winkel von 34° gegenüber der Standebene 78 der, insbesondere handgeführten, Gartenbearbeitungsmaschine 10 auf.

Die, insbesondere handgeführte, Gartenbearbeitungsmaschine 10 weist eine Bedienvorrichtung 46 auf. Die Bedienvorrichtung 46 ist an der Führungseinheit 44 angeordnet. Die Bedienvorrichtung 46 ist zu einer Aktivierung, einer Deaktivierung und/oder einer Regelung der Vorschubsunterstützung vorgesehen. Die Bedienvorrichtung 46 weist eine Betätigungseinheit 14 auf. Die Betätigungseinheit 14 ist zu einer Ansteuerung des den Vorschub erzeugenden Antriebs 12 der, insbesondere handgeführten, Gartenbearbeitungsmaschine 10 vorgesehen. Die Betätigungseinheit 14 ist zu einer Ansteuerung des das Mähwerkzeug 56 antreibenden Antriebs 42 der, insbesondere handgeführten, Gartenbearbeitungsmaschine 10 vorgesehen. Die Betätigungseinheit 14 weist ein erstes Betätigungselement 16 auf. Das erste Betätigungselement 16 ist beweglich gelagert. Das erste Betätigungselement 16 ist um eine Drehachse 90 schwenkbar gelagert. Die Drehachse 90, um die das erste Betätigungselement 16 schwenkbar gelagert ist, verläuft im Wesentlichen parallel zu der Haupterstreckungsrichtung 84 des Handgriffs 74. Das erste Betätigungselement 16 ist zu einer Aktivierung eines Standby-Betriebszustands der Antriebseinheit 70, insbesondere zumindest eines der Antriebe 12, 42 der Antriebseinheit 70, vorgesehen. Eine Schwenkung des ersten Betätigungselements 16 in eine auf den Handgriff 74 hinweisende Richtung, bis das erste Betätigungselement 16 an dem Handgriff 74 anliegt, aktiviert den Standby-Betriebszustand. Eine Schwenkung des ersten Betätigungselements 16 in eine von dem Handgriff 74 wegweisende Richtung deaktiviert den Standby-Betriebszustand. Das erste Betätigungselement 16 bildet einen Bedieneranwesenheitssensor aus. Bei einer Abwesenheit des Bedieners bewegt sich das erste Betätigungselement 16 selbsttätig in eine Position in welcher der Standby-Betriebszustand deaktiviert ist. Das erste Betätigungselement 16 muss zu einem Halten des Stand-by-Betriebszustands in einem betätigten Zustand, in welchem das erste Betätigungselement 16 insbesondere an dem Handgriff 74 anliegt, gehalten werden. Hierdurch kann insbesondere ein erstes Betätigungselement 16 bereitgestellt werden, welches eine zusätzliche Bediensicherheit bereitstellt.

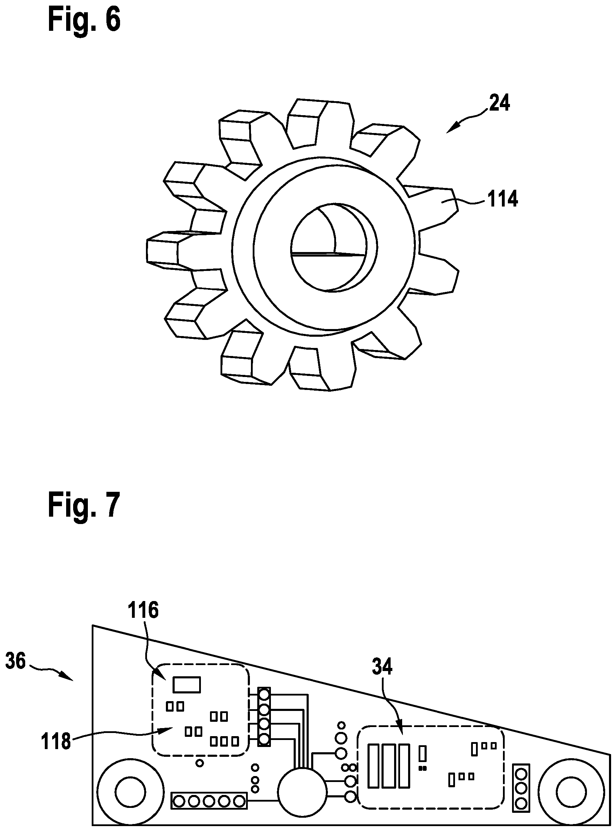

Die Betätigungseinheit 14 ist in einem Übergangsbereich zwischen dem Handgriff 74 und den Führungsstangen 80, 80' angeordnet. Die Betätigungseinheit 14 ist an einer Querstange 94 der Führungseinheit 44 angeordnet. Die Querstange 94 erstreckt sich parallel zu dem Handgriff 74. Die Querstange 94 ist in einem Übergangsbereich zwischen dem Handgriff 74 und den Führungsstangen 80, 80' angeordnet. Die Querstange 94 ist an den dem Handgriff 74 zugewandten Enden der Führungsstangen 80, 80' mit den Führungsstangen 80, 80' verbunden. Das erste Betätigungselement 16 ist beweglich an der Querstange 94 gelagert. Das erste Betätigungselement 16 ist bügelförmig ausgebildet. Das erste Betätigungselement 16 erstreckt sich im Wesentlichen parallel zu dem Handgriff 74. Eine Form des ersten Betätigungselements 16 entspricht im Wesentlichen einer Form des Handgriffs 74. Ferner weist die Betätigungseinheit 14 ein zweites Betätigungselement 30 auf. Das zweite Betätigungselement 30 ist an einer Stirnseite der Querstange 94 angeordnet. Das zweite Betätigungselement 30 ist von einem Druckknopf gebildet. Das zweite Betätigungselement 30 ist zu einer Aktivierung und/oder Deaktivierung der Mähwerkeinheit 32 und/oder des zugehörigen Antriebs 42 vorgesehen. Durch eine Betätigung des zweiten Betätigungselements 30 wird der Antrieb 42 aktiviert bzw., wenn der Antrieb 42 bereits aktiviert ist, deaktiviert. Das zweite Betätigungselement 30 ist in einem betätigten Zustand des ersten Betätigungselements 16 zu einer Aktivierung und/oder Deaktivierung der Mähwerkeinheit 32 vorgesehen. Das zweite Betätigungselement 30 kann nur betätigt werden, wenn das erste Betätigungselement 16 bereits betätigt ist bzw. sich bereits in einem betätigten Zustand befindet. Das zweite Betätigungselement 30 kann nur betätigt werden, wenn sich die Antriebseinheit 70, insbesondere der den Vorschub erzeugende Antrieb 12, in dem Standby-Betriebszustand befindet. Das zweite Betätigungselement 30 ist mit einem Mikrokontroller 34 gekoppelt (vgl. auch Fig. 7). Der Mikrokontroller 34 ist zumindest dazu vorgesehen, einen Betätigungszustand des zweiten Betätigungselements 30 auszulesen und in Steuer- und/oder Regelbefehle an die Mähwerkeinheit 32, insbesondere an die Antriebseinheit 70, bevorzugt an den das Mähwerkzeug 56 antreibenden Antrieb 42 der Antriebseinheit 70, umzuwandeln. Der Mikrokontroller 34 ist dazu vorgesehen, einen Betätigungszustand des ersten Betätigungselements 16 und/oder einen Standby-Betriebszustand des den Vorschub erzeugenden Antriebs 12 auszulesen und bei einer Betätigung des zweiten Betätigungselements 30 die durch den Mikrokontroller 34 an die Antriebseinheit 70 ausgesandten Regel- und/oder Steuerbefehle davon abhängig zu machen. Befindet sich beispielsweise das erste Betätigungselement 16 in einem unbetätigten Zustand, sendet der Mikrokontroller 34 keine Aktivierungsbefehle an den Antrieb 42 der Antriebseinheit 70, welcher das Mähwerkzeug 56 antreibt aus. Die, insbesondere handgeführte, Gartenbearbeitungsmaschine 10 weist eine Steuer- und/oder Regeleinheit 98 auf. Der Mikrokontroller 34 ist einstückig mit der Steuer- und/oder Regeleinheit 98 ausgebildet. Alternativ kann der Mikrokontroller 34 separat von der Steuer- und/oder Regeleinheit 98 ausgebildet sein.

Die Bedienvorrichtung 46 weist eine Einstelleinheit 18 auf. Die Einstelleinheit 18 umfasst ein Einstellelement 20. Das Einstellelement 20 ist zu einer Einstellung eines Vorschubsunterstützungsparameters vorgesehen. Der Vorschubsunterstützungsparameter bestimmt eine Stärke und/oder eine Geschwindigkeit des durch den Antrieb 12 erzeugten Vorschubs. Das Einstellelement 20 ist um eine Drehachse 92 rotierbar ausgebildet. Die Drehachse 92 des Einstellelements 20 verläuft zentral durch das Einstellelement 20. Die Drehachse 92 des Einstellelements 20 verläuft zumindest im Wesentlichen parallel zu der Haupterstreckungsrichtung 84 des Handgriffs 74. Das Einstellelement 20 ist drehbar an der Querstange 94 angeordnet. Das Einstellelement 20 ist von einer Drehhülse 22 gebildet. Das Einstellelement 20 bildet einen Drehgriff aus. Eine Bedienung des Drehgriffs ist vergleichbar mit einer Bedienung eines Gashebels eines Motorkraftrads. Das Einstellelement 20 ist anschlagsfrei ausgebildet. Das Einstellelement 20 ist um mehr als 360° um die Drehachse 92 des Einstellelements 20 rotierbar. Ein Rotationswinkel des Einstellelements 20 um die Drehachse 92 des Einstellelements 20 ist unbegrenzt.

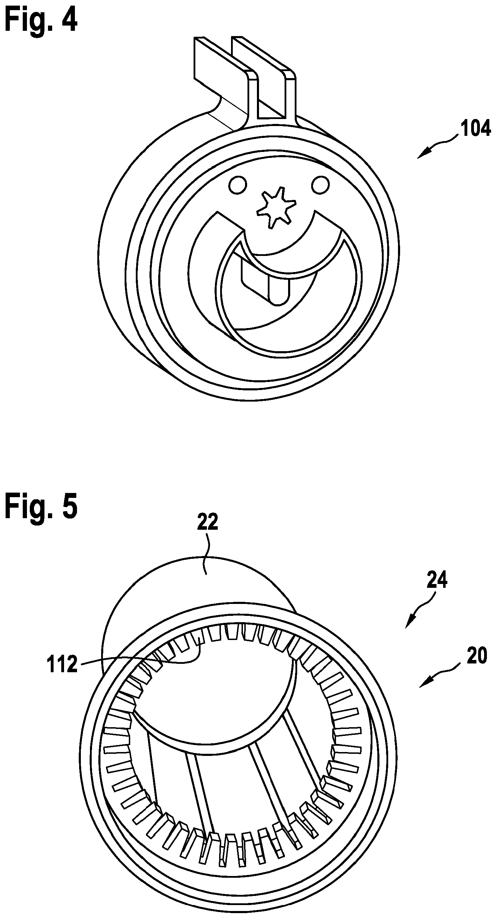

Die Einstelleinheit 18 ist in zumindest einem Betriebszustand zu einem selbsttätigen Zurücksetzen des mittels des Einstellelements 20 eingestellten Vorschubsunterstützungsparameters vorgesehen. Bei einem Zurücksetzten des Vorschubsunterstützungsparameters bleibt das Einstellelement 20 unbewegt. Bei einem Zurücksetzen des Vorschubsunterstützungsparameters wird der Vorschubsunterstützungsparameter auf einen Ausgangswert zurückgesetzt. Bei einem Zurücksetzen des Vorschubsunterstützungsparameters wird der Vorschubsunterstützungsparameter auf einen Null-Wert zurückgesetzt. Die Einstelleinheit 18 ist unabhängig von einer Einstellposition des Einstellelements 20 bei einem Lösen des Betätigungselements 16 zu einem selbsttätigen Zurücksetzen des Vorschubsunterstützungsparameters des Einstellelements 20 auf den Ausgangswert, insbesondere den Wert Null, vorgesehen. Die Einstelleinheit 18 ist unabhängig von einer Einstellposition des Einstellelements 20 bei einem Verschwenken des ersten Betätigungselements 16 in die von dem Handgriff 74 wegweisende Richtung zu einem selbsttätigen Zurücksetzen des Vorschubsunterstützungsparameters des Einstellelements 20 auf den Ausgangswert vorgesehen. Die Einstelleinheit 18 weist ein Untersetzungsgetriebe 24 auf (vgl. auch Figuren 5 und 6). Alternativ kann die Einstelleinheit 18 einen Direktantrieb (nicht gezeigt) aufweisen. Die Einstelleinheit 18 weist ein Erfassungselement 26 auf. Das Erfassungselement 26 ist über das Untersetzungsgetriebe 24 mit dem Einstellelement 20 gekoppelt. Das Erfassungselement 26 ist zu einer Erfassung einer aktuellen Einstellposition des Einstellelements 20 vorgesehen. Das Erfassungselement 26 ist zu einer Erfassung einer aktuellen Drehlage des Einstellelements 20 vorgesehen. Das Erfassungselement 26 ist zu einer Erfassung einer aktuellen Betätigungsrichtung des Einstellelements 20 vorgesehen. Das Erfassungselement 26 ist zu einer Erfassung einer Rotationsrichtung des Einstellelements 20 um die Drehachse 92 vorgesehen. Das Erfassungselement 26 ist zu einer Erfassung einer aktuellen Betätigungsgeschwindigkeit des Einstellelements 20 vorgesehen. Das Erfassungselement 26 ist zu einer Erfassung einer Rotationsgeschwindigkeit des Einstellelements 20 um die Drehachse 92 vorgesehen. Das Erfassungselement 26 ist von einem Drehgeber 28 gebildet. Der Drehgeber 28 ist als ein Inkrementalgeber ausgebildet. Alternativ kann der Drehgeber 28 als ein Absolutwertgeber ausgebildet sein. Der Mikrokontroller 34 ist mit Teilen des Drehgebers 28 auf einer gemeinsamen Platine 36 angeordnet. Die Platine 36 ist einstückig mit der Steuer- und/oder Regeleinheit 98 ausgebildet.

Die Steuer- und/oder Regeleinheit 98 umfasst eine Recheneinheit 96. Die Recheneinheit 96 ist zu einer Ansteuerung der Antriebseinheit 70, zu einer Auswertung von Sensordaten des Erfassungselements 26 sowie zu einer Auswertung aktueller Betriebskenngrößen der, insbesondere handgeführten, Gartenbearbeitungsmaschine 10 vorgesehen. Die Recheneinheit 96 ist zu einer Ansteuerung des als Unterstützungsantrieb ausgebildeten Antriebs 12 zur Fortbewegung der, insbesondere handgeführten, Gartenbearbeitungsmaschine 10 vorgesehen. Die Recheneinheit 96 umfasst dazu eine Sensorelektronik zu einer Auswertung der Sensordaten des Erfassungselements 26. Die Recheneinheit 96 umfasst zudem eine Geschwindigkeitssteuerelektronik zu einer Ansteuerung des Antriebs 12 der Antriebseinheit 70. Die Recheneinheit 96 ist dazu vorgesehen, abhängig von einem erfassten Ausgangssignal des Erfassungselements 26 sowie abhängig von einer erfassten aktuellen Betriebskenngröße der, insbesondere handgeführten, Gartenbearbeitungsmaschine 10 den als Unterstützungsantrieb ausgebildeten Antrieb 12 der, insbesondere handgeführten, Gartenbearbeitungsmaschine 10 anzusteuern. Die Recheneinheit 96 ist dabei dazu vorgesehen, aus dem erfassten Ausgangssignal des Erfassungselements 26 sowie aus einer erfassten aktuellen Betriebskenngröße der, insbesondere handgeführten, Gartenbearbeitungsmaschine 10 auf eine von einem Bediener gewünschte Vorschubsunterstützung zu schließen. Die Recheneinheit 96 ist dazu mit dem Erfassungselement 26 elektrisch verbunden. Die Recheneinheit 96 ist nicht weiter sichtbar über Kabel mit dem Erfassungselement 26, insbesondere mit Sensorelementen des Erfassungselements 26, verbunden. Grundsätzlich wäre jedoch auch eine drahtlose Verbindung denkbar. Ferner ist die Recheneinheit 96 nicht weiter sichtbar über Kabel mit dem Antrieb 12 der Antriebseinheit 70 verbunden. Grundsätzlich wäre jedoch auch hier eine drahtlose Verbindung denkbar. Die Recheneinheit 96 addiert während eines Betriebs die von dem Erfassungselement 26 erfassten Rotationswinkel und/oder -geschwindigkeiten und steuert entsprechend den Antrieb 12 zur Fortbewegung der, insbesondere handgeführten, Gartenbearbeitungsmaschine 10 an. Die Recheneinheit 96 ist in der Querstange 94 der Führungseinheit 44 angeordnet. Dadurch kann eine Störung der Recheneinheit 96 durch die Grundeinheit 38 der, insbesondere handgeführten, Gartenbearbeitungsmaschine 10 vermieden werden. Grundsätzlich wäre jedoch auch eine andere, einem Fachmann als sinnvoll erscheinende Anordnung denkbar.

Zudem weist die Steuer- und/oder Regeleinheit 98 eine weitere Recheneinheit 100 auf, welche zu einer Ansteuerung des Antriebs 42 für die Mähwerkeinheit 32 vorgesehen ist. Die weitere Recheneinheit 100 ist nicht weiter sichtbar über Kabel mit der Recheneinheit 96 verbunden. Grundsätzlich wäre jedoch auch eine Funkverbindung denkbar. Die weitere Recheneinheit 100 ist in der Grundeinheit 38 der, insbesondere handgeführten, Gartenbearbeitungsmaschine 10 angeordnet.

Die Fig. 3 zeigt eine schematische, vereinfachte Explosionsdarstellung eines Teils der Bedienvorrichtung 46. Die Querstange 94 ist an beiden Enden mittels Befestigungselementen 102 mit dem Rest der Führungseinheit 44 verbunden. Auf die Querstange 94 ist die Drehhülse 22 des Einstellelements 20 aufgeschoben. Die Drehhülse 22 umgreift die Querstange 94 vollständig. Ein Ende der Drehhülse 22 ist mit einem Gehäuse 104 des Drehgebers 28 gekoppelt. Innerhalb des Gehäuses 104 ist der Drehgeber 28 und ein Drehgelenk 140 angeordnet. An dem Ende der Querstange 94, an dem die Drehhülse 22 angeordnet ist, ist zudem das zweite Betätigungselement 30 angeordnet. Das zweite Betätigungselement 30 umfasst einen Mikroschalter 106, eine Haltevorrichtung 108 für den Mikroschalter 106 und ein Schaltergehäuse 110.

Fig. 5 zeigt eine schematische Ansicht des als Drehhülse 22 ausgebildeten Einstellelements 20 der Einstelleinheit 18. Die Drehhülse 22 weist eine komplett umlaufende Innenverzahnung 112 auf. Dadurch ist vorteilhaft ein anschlagsfreies Einstellelement 20 ermöglicht. Die Einstelleinheit 18 weist das Untersetzungsgetriebe 24 auf. Die Drehhülse 22 bildet zusammen mit einem in Fig. 6 gezeigten Getriebezahnrad 114 der Einstelleinheit 18 das Untersetzungsgetriebe 24 zumindest teilweise aus. Das Untersetzungsgetriebe 24 ist dazu vorgesehen, das Erfassungselement 26, insbesondere den Drehgeber 28 des Erfassungselements 26, mit dem Einstellelement 20 zu koppeln. Das Untersetzungsgetriebe 24 ist dazu vorgesehen, eine Drehbewegung der Drehhülse 22 in eine winkel- und/oder geschwindigkeitsreduzierte Drehbewegung des Erfassungselements 26 zu übersetzen.

Fig. 7 zeigt eine schematische Ansicht der Platine 36 der Steuer- und/oder Regeleinheit 98 der, insbesondere handgeführten, Gartenbearbeitungsmaschine 10. Die Platine 36 umfasst die elektronischen Steuer- und/oder Regelschaltkreise der Steuer- und/oder Regeleinheit 98. Die Platine 36 umfasst zumindest einen Auslese- und/oder Auswerteschaltkreis 116 des Erfassungselements 26. Die Platine 36 umfasst zumindest eine Energieversorgung 118 des Erfassungselements 26. Die Platine 36 umfasst zumindest den Mikrokontroller 34. Die Schaltkreise des Mikrokontrollers 34 und des Erfassungselements 26 sind signaltechnisch verbunden.

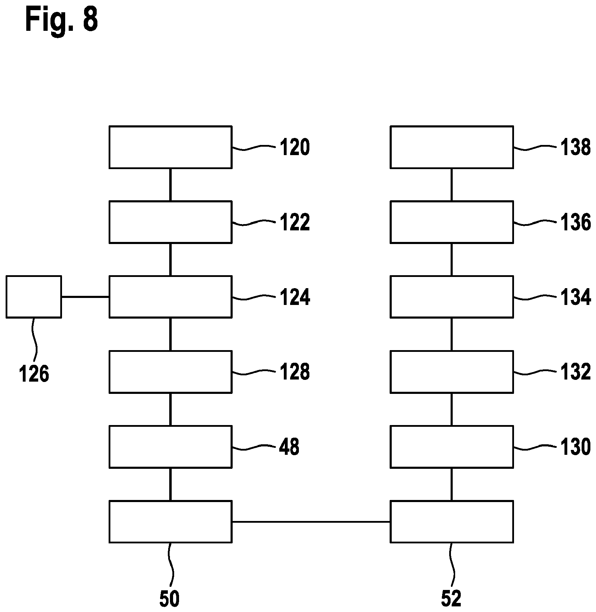

Fig. 8 zeigt ein Ablaufdiagramm eines Verfahrens zu einem Betrieb der, insbesondere handgeführten, Gartenbearbeitungsmaschine 10 mit der Bedienvorrichtung 46. In zumindest einem Verfahrensschritt 120 wird das erste Betätigungselement 16 von einem Bediener betätigt. Dabei wird das erste Betätigungselement 16 verschwenkt, bis es in einer an dem Handgriff 74 anliegenden Position ist. Durch diese Betätigung des ersten Betätigungselements 16 durch den Bediener wird der den Vorschub erzeugende Antrieb 12 der Antriebseinheit 70 in den Standby-Betriebszustand versetzt. In zumindest einem weiteren Verfahrensschritt 122 wird das zweite Betätigungselement 30 durch einen Druck des Bedieners betätigt. In zumindest einem weiteren Verfahrensschritt 124 wird von der Steuer- und/oder Regeleinheit 98 geprüft, ob das erste Betätigungselement 16 sich in einem betätigten Zustand befindet und/oder ob sich der den Vorschub erzeugende Antrieb 12 der Antriebseinheit 70 in dem Standby-Betriebszustand befindet. In zumindest einem weiteren Verfahrensschritt 126 wird im Fall, dass sich das erste Betätigungselement 16 nicht in dem aktivierten Zustand befindet oder in dem Fall, dass sich der den Vorschub erzeugende Antrieb 12 der Antriebseinheit 70 nicht in dem Standby-Betriebszustand befindet, eine Aktivierung des das Mähwerkzeug 56 antreibenden Antriebs 42 von der Steuer- und/oder Regeleinheit 98 unterbunden bzw. nicht durchgeführt. In zumindest einem weiteren Verfahrensschritt 128 wird im Fall, dass sich das erste Betätigungselement 16 in dem aktivierten Zustand befindet oder in dem Fall, dass sich der den Vorschub erzeugende Antrieb 12 der Antriebseinheit 70 in dem Standby-Betriebszustand befindet, der das Mähwerkzeug 56 antreibende Antrieb 42 von der Steuer- und/oder Regeleinheit 98 aktiviert. In dem Verfahrensschritt 128 wird der Mähvorgang gestartet. In zumindest einem weiteren Verfahrensschritt 130 wird von dem Bediener eine Einstellung durch eine Rotation des Einstellelements 20 vorgenommen. In zumindest einem Erfassungsschritt 48 wird dabei eine Sequenz von Ausgabesignalen des Erfassungselements 26 erfasst. In zumindest einem auf den Erfassungsschritt 48 folgenden Auswerteschritt 50 wird abhängig von der Sequenz von Ausgabesignalen des Erfassungselements 26 auf eine Drehrichtung des Einstellelements 20 rückgeschlossen. In zumindest einem auf den Auswerteschritt 50 folgenden Einstellschritt 52 wird, abhängig von einer Drehrichtung des Einstellelements 20 der Vorschubsunterstützungsparameter erhöht oder verringert. In dem Einstellschritt 52 wird, abhängig von einer Drehgeschwindigkeit des Einstellelements 20 während des Verfahrensschritts 130, in dem der Bediener eine Einstellung des Einstellelements 20 vornimmt, ein Änderungsfaktor zu einer Veränderung des Vorschubsunterstützungsparameters eingestellt. Die Veränderung des Vorschubsunterstützungsparameters bzw. der Vorschubsunterstützungsparameter wird von der Steuer- und/oder Regeleinheit 98 in eine Antriebsgeschwindigkeitseinstellung für den Antrieb 12, der den Vorschub der, insbesondere handgeführten, Gartenbearbeitungsmaschine 10 erzeugt, umgerechnet, welche an die Antriebseinheit 70 übermittelt wird. In zumindest einem weiteren Verfahrensschritt 132 wird die, insbesondere handgeführten, Gartenbearbeitungsmaschine 10 durch den Antrieb 12 bewegt. In dem Verfahrensschritt 132 wird die durch den Bediener vorgegebene Bewegung der, insbesondere handgeführten, Gartenbearbeitungsmaschine 10 durch den Antrieb 12 unterstützt. In zumindest einem Verfahrensschritt 134 lässt der Bediener das erste Betätigungselement 16 los. Dabei wird das erste Betätigungselement 16 in den unbetätigten Zustand versetzt. In zumindest einem weiteren Verfahrensschritt 136 werden der den Vorschub erzeugende Antrieb 12 und der das Mähwerkzeug 56 antreibende Antrieb 42 als Reaktion auf das Loslassen des ersten Betätigungselements 16 gestoppt. In zumindest einem weiteren Verfahrensschritt 138 wird der Vorschubsunterstützungsparameter durch die Ein-stelleinheit 18 in Folge des Lösens des ersten Betätigungselements 16 selbsttätig auf einen Ausgangswert zurückgesetzt. In dem Verfahrensschritt 138 wird die Einstellung des Einstellelements 20 auf den Wert Null zurückgesetzt. In dem Verfahrensschritt 138 wird die Einstellung des Einstellelements 20 derart zurückgesetzt, dass bei einer Reaktivierung des den Vorschub erzeugenden Antriebs 12 eine Neueinstellung des gewünschten Vorschubsunterstützungsparameters notwendig ist.

## Patentansprüche

1. Bedienvorrichtung (46) für eine, insbesondere handgeführte, Gartenbearbeitungsmaschine (10), insbesondere Schiebe-Rasenmäher, mit zumindest einer zu einer Ansteuerung zumindest eines Antriebs (12, 42) der Gartenbearbeitungsmaschine (10) vorgesehenen Betätigungseinheit (14), die zumindest ein erstes beweglich gelagertes Betätigungselement (16) aufweist, welches zu einer Aktivierung eines Standby-Betriebszustands der Gartenbearbeitungsmaschine (10) vorgesehen ist, und mit zumindest einer Einstelleinheit (18), die zumindest ein Einstellelement (20) zu einer Einstellung eines Vorschubsunterstützungsparameters aufweist, wobei die Einstelleinheit (18) in zumindest einem Betriebszustand zu einem selbsttätigen Zurücksetzen des Vorschubsunterstützungsparameters des Einstellelements (20) vorgesehen ist, **dadurch gekennzeichnet, dass** das Einstellelement (20) anschlagsfrei von einer Drehhülse (22), insbesondere einem Drehgriff, gebildet ist.

2. Bedienvorrichtung (46) nach Anspruch 1, **dadurch gekennzeichnet, dass** die Einstelleinheit (18) bei einem Lösen des ersten Betätigungselements (16), unabhängig von einer Einstellposition des Einstellelements (20), zu einem selbsttätigen Zurücksetzen des Vorschubsunterstützungsparameters des Einstellelements (20) auf einen Ausgangswert, insbesondere einen Wert Null, vorgesehen ist.

3. Bedienvorrichtung (46) nach Anspruch 1 oder 2, **dadurch gekennzeichnet, dass** die Einstelleinheit (18) bei einer Betätigung des ersten Betätigungselements (16) dazu vorgesehen ist, eine aktuelle Einstellposition des Einstellelements (20) als eine Ausgangsstellung, insbesondere als eine Null-Wert-Stellung, zu definieren.

4. Bedienvorrichtung (46) nach einem der vorhergehenden Ansprüche, **dadurch gekennzeichnet, dass** die Einstelleinheit (18) zumindest ein Untersetzungsgetriebe (24) und/oder einen Direktantrieb und zumindest ein über das Untersetzungsgetriebe (24) und/oder den Direktantrieb mit dem Einstellelement (20) gekoppeltes Erfassungselement (26), das zu einer Erfassung einer aktuellen Einstellposition des Einstellelements (20), einer aktuellen Betätigungsrichtung des Einstellelements (20) und/oder einer aktuellen Betätigungsgeschwindigkeit des Einstellelements (20) vorgesehen ist, aufweist.

5. Bedienvorrichtung (46) nach Anspruch 4, **dadurch gekennzeichnet, dass** das Erfassungselement (26) von einem Drehgeber (28) gebildet ist.

6. Bedienvorrichtung (46) nach einem der vorhergehenden Ansprüche, **dadurch gekennzeichnet, dass** die Betätigungseinheit (14) zumindest ein zweites Betätigungselement (30) aufweist, welches in einem betätigten Zustand des ersten Betätigungselements (16) zu einer Aktivierung und/oder Deaktivierung einer Mähwerkeinheit (32) der, insbesondere handgeführten, Gartenbearbeitungsmaschine (10) vorgesehen ist.

7. Bedienvorrichtung (46) nach Anspruch 5 und 6, **dadurch gekennzeichnet, dass** das zweite Betätigungselement (30) mit einem Mikrokontroller (34) gekoppelt ist, wobei der Mikrokontroller (34) und der Drehgeber (28) zumindest teilweise auf einer gemeinsamen Platine (36) angeordnet sind.

8. Gartenbearbeitungsmaschine (10), insbesondere Schiebe-Rasenmäher, mit einer Grundeinheit (38), die eine Mähwerkeinheit (32) zu einer Bearbeitung einer Arbeitsfläche (40), insbesondere einer Grünfläche, und einen Antrieb (12, 42) aufweist, welcher dazu vorgesehen ist, während eines Betriebs eine Vorschubsunterstützung der Grundeinheit (38) bereitzustellen, mit einer Führungseinheit (44) und mit einer an der Führungseinheit (44) angeordneten Bedienvorrichtung (46) nach einem der vorhergehenden Ansprüche.

9. Verfahren zu einem Betrieb einer Gartenbearbeitungsmaschine (10) nach Anspruch 8, mit einer Bedienvorrichtung (46), die eine Einstelleinheit (18) umfasst, welche zumindest ein Einstellelement (20) zu einer Einstellung eines Vorschubsunterstützungsparameters und zumindest ein mit dem Einstellelement (20) gekoppeltes Erfassungselement (26) aufweist, das zu einer Erfassung einer aktuellen Einstellposition des Einstellelements (20), einer aktuellen Betätigungsrichtung des Einstellelements (20) und/oder einer aktuellen Betätigungsgeschwindigkeit des Einstellelements (20) vorgesehen ist, wobei in zumindest einem Erfassungsschritt (48) eine Sequenz von Ausgabesignalen des Erfassungselements (26) erfasst wird und in zumindest einem Auswerteschritt (50) abhängig von einer Sequenz von Ausgabesignalen des Erfassungselements (26) auf eine Drehrichtung des Einstellelements (20) rückgeschlossen wird.

10. Verfahren nach Anspruch 9, **dadurch gekennzeichnet, dass** in zumindest einem Einstellschritt (52), abhängig von einer Drehrichtung des Einstellelements (20) der Vorschubsunterstützungsparameter erhöht oder verringert wird.

11. Verfahren nach Anspruch 10, **dadurch gekennzeichnet, dass** in dem zumindest einen Einstellschritt (52), abhängig von einer Drehgeschwindigkeit des Einstellelements (20) ein Änderungsfaktor zu einer Veränderung des Vorschubsunterstützungsparameters eingestellt wird.

12. Verfahren nach einem der Ansprüche 9 bis 11, **dadurch gekennzeichnet, dass** die Einstelleinheit (18) der Bedienvorrichtung (46) bei einem Lösen des ersten Betätigungselements (16) den Vorschubsunterstützungsparameter des Einstellelements (20) selbsttätig auf einen Ausgangswert zurücksetzt.

## Claims

1. Operating device (46) for an in particular hand-guided gardening machine (10), in particular a push-type lawnmower, having at least one actuating unit (14) which is provided for activating at least one drive (12, 42) of the gardening machine (10) and which has at least one first movably mounted actuating element (16), which is provided for the activation of a standby operating state of the gardening machine (10), and having at least one setting unit (18), which has at least one setting element (20) for setting a feed support parameter, wherein, in at least one operating state, the setting unit (18) is provided to automatically reset the feed support parameter of the setting element (20), **characterized in that** the setting unit (20) is formed by a rotary sleeve (22), in particular a rotary handle, which has no stop.

2. Operating device (46) according to Claim 1, **characterized in that** when the first actuating element (16) is released, irrespective of a setting position of the setting element (20), the setting unit (18) is provided to automatically reset the feed support parameter of the setting element (20) to an initial value, in particular a value of zero.

3. Operating device (46) according to Claim 1 or 2, **characterized in that** when the first actuating element (16) is actuated, the setting unit (18) is provided to define a current setting position of the setting element (20) as an initial position, in particular as a zerovalue position.

4. Operating device (46) according to one of the preceding claims, **characterized in that** the setting unit (18) has at least one reduction gear (24) and/or a direct drive and at least one detection element (26) which is coupled to the setting element (20) via the reduction gear (24) and/or the direct drive and which is provided to detect a current setting position of the setting element (20), a current actuating direction of the setting element (20) and/or a current actuating speed of the setting element (20).

5. Operating device (46) according to Claim 4, **characterized in that** the detection element (26) is formed by a rotary encoder (28).

6. Operating device (46) according to one of the preceding claims, **characterized in that** the actuating unit (14) has at least one second actuating element (30) which, when the first actuating element (16) is actuated, is provided to activate and/or deactivate a mowing unit (32) of the in particular hand-guided gardening machine (10) .

7. Operating device (46) according to Claim 5 and 6, **characterized in that** the second actuating element (30) is coupled to a microcontroller (34), wherein the microcontroller (34) and the rotary encoder (28) are at least partly arranged on a common circuit board (36).

8. Gardening machine (10), in particular a push-type lawnmower, having a base unit (38) which has a mowing unit (32) for processing a working area (40), in particular a green area, and a drive (12, 42), which is designed to provide feed support for the base unit (38) during an operation, having a guide unit (44) and having an operating device (46) according to one of the preceding claims arranged on the guide unit (44).

9. Method for operating a gardening machine (10) according to Claim 8, having an operating device (46) which comprises a setting unit (18), which has at least one setting element (20) for setting a feed support parameter and at least one detection element (26) which is coupled to the setting element (20) and which is provided to detect a current setting position of the setting element (20), a current actuating direction of the setting element (20) and/or a current actuating speed of the setting element (20), wherein, in at least one detection step (48), a sequence of output signals from the detection element (26) is detected and, in at least one evaluation step (50), depending on a sequence of output signals from the detection element (26), a direction of rotation of the setting element (20) is inferred.

10. Method according to Claim 9, **characterized in that** in at least one setting step (52), the feed support parameter is increased or reduced, depending on a direction of rotation of the setting element (20).

11. Method according to Claim 10, **characterized in that** in the at least one setting step (52), a change factor for changing the feed support parameter is set depending on a speed of rotation of the setting element (20).

12. Method according to one of Claims 9 to 11, **characterized in that** when the first actuating element (16) is released, the setting unit (18) of the operating device (46) automatically resets the feed support parameter of the setting element (20) to an initial value.

## Revendications

1. Dispositif de commande (46) pour une machine de jardinage (10), notamment manuelle, notamment une tondeuse à gazon à pousser, avec au moins une unité d'actionnement (14) prévue pour commander au moins un entraînement (12, 42) de la machine de jardinage (10), qui présente au moins un premier élément d'actionnement (16) monté mobile, qui est prévu pour activer un état de fonctionnement d'attente de la machine de jardinage (10), et avec au moins une unité de réglage (18), qui présente au moins un élément de réglage (20) pour régler un paramètre d'assistance à l'avancement, l'unité de réglage (18) étant prévue dans au moins un état de fonctionnement pour réinitialiser automatiquement le paramètre d'assistance à l'avancement de l'élément de réglage (20), **caractérisé en ce que** l'élément de réglage (20) est formé sans butée par une douille rotative (22), notamment une poignée rotative.

2. Dispositif de commande (46) selon la revendication 1, **caractérisé en ce que** l'unité de réglage (18) est prévue, lors d'un relâchement du premier élément d'actionnement (16), indépendamment d'une position de réglage de l'élément de réglage (20), pour réinitialiser automatiquement le paramètre d'assistance à l'avancement de l'élément de réglage (20) à une valeur initiale, notamment une valeur zéro.

3. Dispositif de commande (46) selon la revendication 1 ou 2, **caractérisé en ce que** l'unité de réglage (18) est prévue, lors d'un actionnement du premier élément d'actionnement (16), pour définir une position de réglage actuelle de l'élément de réglage (20) comme une position initiale, notamment comme une position de valeur zéro.

4. Dispositif de commande (46) selon l'une quelconque des revendications précédentes, **caractérisé en ce que** l'unité de réglage (18) présente au moins une transmission réductrice (24) et/ou un entraînement direct et au moins un élément de détection (26) couplé à l'élément de réglage (20) par l'intermédiaire de la transmission réductrice (24) et/ou de l'entraînement direct, qui est prévu pour détecter une position de réglage actuelle de l'élément de réglage (20), une direction d'actionnement actuelle de l'élément de réglage (20) et/ou une vitesse d'actionnement actuelle de l'élément de réglage (20).

5. Dispositif de commande (46) selon la revendication 4, **caractérisé en ce que** l'élément de détection (26) est formé par un capteur de rotation (28).

6. Dispositif de commande (46) selon l'une quelconque des revendications précédentes, **caractérisé en ce que** l'unité d'actionnement (14) présente au moins un deuxième élément d'actionnement (30) qui, dans un état actionné du premier élément d'actionnement (16), est prévu pour activer et/ou désactiver une unité de broyage (32) de la machine de jardinage (10), notamment manuelle.

7. Dispositif de commande (46) selon les revendications 5 et 6, **caractérisé en ce que** le deuxième élément d'actionnement (30) est couplé à un microcontrôleur (34), le microcontrôleur (34) et le capteur de rotation (28) étant disposés au moins partiellement sur une platine commune (36).

8. Machine de jardinage (10), notamment tondeuse à gazon à pousser, avec une unité de base (38), qui présente une unité de broyage (32) pour traiter une surface de travail (40), notamment une surface verte, et un entraînement (12, 42) qui est prévu pour fournir, pendant un fonctionnement, une assistance à l'avancement de l'unité de base (38), avec une unité de guidage (44) et avec un dispositif de commande (46) selon l'une quelconque des revendications précédentes, disposé sur l'unité de guidage (44).

9. Procédé pour faire fonctionner une machine de jardinage (10) selon la revendication 8, avec un dispositif de commande (46), qui comprend une unité de réglage (18), qui présente au moins un élément de réglage (20) pour régler un paramètre d'assistance à l'avancement et au moins un élément de détection (26) couplé à l'élément de réglage (20), qui sert à détecter une position de réglage actuelle de l'élément de réglage (20), une direction d'actionnement actuelle de l'élément de réglage (20) et/ou une vitesse d'actionnement actuelle de l'élément de réglage (20), une séquence de signaux de sortie de l'élément de détection (26) étant détectée dans au moins une étape de détection (48) et une direction de rotation de l'élément de réglage (20) étant déduite dans au moins une étape d'évaluation (50) en fonction d'une séquence de signaux de sortie de l'élément de détection (26) .

10. Procédé selon la revendication 9, **caractérisé en ce que,** dans au moins une étape de réglage (52), le paramètre d'assistance à l'avancement est augmenté ou diminué en fonction d'une direction de rotation de l'élément de réglage (20).

11. Procédé selon la revendication 10, **caractérisé en ce que,** dans l'au moins une étape de réglage (52), un facteur de variation est réglé pour modifier le paramètre d'assistance à l'avancement en fonction d'une vitesse de rotation de l'élément de réglage (20).

12. Procédé selon l'une quelconque des revendications 9 à 11, **caractérisé en ce que** l'unité de réglage (18) du dispositif de commande (46), en cas de relâchement du premier élément d'actionnement (16), réinitialise automatiquement le paramètre d'assistance à l'avancement de l'élément de réglage (20) à une valeur initiale.
